# EUROPÄISCHE PATENTSCHRIFT

(11) **EP 1 091 865 B1**
(45) Veröffentlichungstag und Bekanntmachung des Hinweises auf die Patenterteilung: **08.05.2002**
(21) Anmeldenummer: 99932752.1
(22) Anmeldetag: 29.06.1999
(51) Int. Cl.: B60R 21/20

(54) **SICHTEINSATZTEIL FÜR AIRBAGABDECKUNGEN, AIRBAGABDECKUNG UND VERFAHREN ZU DESSEN HERSTELLUNG**
VISIBLE INSERT FOR AIRBAG COVERS, AIRBAG COVER AND METHOD FOR PRODUCING THE SAME
INSERT VISUEL DESTINE A UN COUVERCLE DE SAC GONFLABLE, COUVERCLE DE SAC GONFLABLE ET SON PROCEDE DE PRODUCTION

(30) Priorität: 29.06.1998 DE 19828975
(43) Veröffentlichungstag der Anmeldung: 18.04.2001
(73) Patentinhaber: ELDRA KUNSTSTOFFTECHNIK GMBH, D-84137 Vilsbiburg (DE)
(72) Erfinder: ANGLSPERGER, Erwin, F., D-84307 Eggenfelden (DE); HARTL, Stefan, D-84453 Mühldorf a. Inn (DE)
(74) Vertreter: HOFFMANN - EITLE
(86) Internationale Anmeldenummer: EP9904494
(87) Internationale Veröffentlichungsnummer: WO0000369

(56) Entgegenhaltungen:
- WO-A-98/19893
- DE-A- 19 624 075
- DE-C- 19 617 758
- DE-U- 29 607 536
- US-A- 5 678 851
- PATENT ABSTRACTS OF JAPAN vol. 017, no. 527 (M-1484), 22. September 1993 (1993-09-22) & JP 05 139231 A (TOYODA GOSEI CO LTD), 8. Juni 1993 (1993-06-08)

## Beschreibung

### Technisches Gebiet

Die Erfindung betrifft ein Sichteinsatzteil, das an oder in einer Airbagabdeckung angebracht ist, und eine Airbagabdeckung mit einem solchen Sichteinsatzteil. Ferner betrifft die Erfindung ein Verfahren zur Herstellung eines solchen Sichteinsatzteils.

Airbagabdeckungen in Kraftfahrzeugen weisen häufig daran angebrachte Sichteinsatzteile auf, die als Embleme oder Schriftzüge oder allgemein als Verzierungen ausgebildet sind. Seit der Einführung von Airbagsystemen in Kraftfahrzeugen werden derartige Sichteinsatzteile immer öfter beispielsweise zur Kennzeichnung der Automarke oder als Hinweis auf den unter der Abdeckung verborgenen Airbag eingesetzt.

Unter Sichteinsatzteil ist hier also insbesondere eine aus design- oder werbetechnischen Gründen an oder in einer Airbagabdeckung befestigte Plakette oder Emblem zu verstehen. Solche Embleme sind oft als separates Bauteil am Pralltopf eines Lenkrades plaziert, der einen Airbag beinhaltet, können zum Beispiel aber auch an einer Abdeckung des Beifahrerairbags plaziert sein.

### Stand der Technik

Herkömmliche Sichteinsatzteile für Airbagabdeckungen bestehen beispielsweise aus Metall. Solche Metallsichteinsatzteile werden über eine Nietverbindung fest an einem Trägerteil angebracht. Vor dem Hintergrund der Gewichtsreduzierung im Kraftfahrzeugbau haben sich derartige Sichteinsatzteile aus Metall allerdings als zu schwer erwiesen. Auch aus Kostengründen ist der Einsatz dieser Metallsichteinsatzteile ungünstig, da das erforderliche Annieten relativ arbeitsintensiv und daher auch kostenintensiv ist.

Weiter sind Sichteinsatzteile für Airbagabdeckungen aus Kunststoff bekannt, die durch Ultraschallschweißen, Kleben oder Clipsen mit einem Trägerteil verbunden werden. Dabei ergibt sich vor allem bei kleinen Abmessungen das Problem, daß eine ausreichende Befestigung durch Ultraschallschweißen, aber auch durch Kleben oder Clipsen, nur schwer gewährleistet werden kann. Insbesondere bei Auslösung des unter der Abdeckung verborgenen Airbags bei niedrigen Temperaturen (die Forderung aus dem Automobilbau ist eine einwandfreie Funktion bei Temperaturen bis -35°C) können sich die Sichteinsatzteile von den Airbagabdeckungen lösen, so daß durch eventuell in den Fahrgastraum geschleuderte Sichteinsatzteile ein erhebliches Verletzungsrisiko besteht. Vor allem harte Kunststoffe neigen bei niedrigen Temperaturen und dynamischer Belastung durch die Airbagauslösung nicht nur zum Versagen hinsichtlich der Befestigung, sondern auch aufgrund ihres geringen Verformungsvermögens zum Zerbrechen in mehrere Einzelteile. Derartige Bruchstücke sind teilweise scharfkantig, so daß sich das Verletzungsrisiko für die Insassen weiter erhöht.

Die DE 296 07 536 beschreibt ein Sichteinsatzteil für eine Airbagabdeckung, das in einem Trägerteil anbringbar ist und an dem ein Fangelement reißfest befestigt ist. Das Fangelement ist mit dem Trägerteil verbindbar. Beim Zerbrechen des Sichteinsatzteils in mehrere Bruchstücke sind diese fest miteinander verbunden, um ein unkontrolliertes Loslösen des Sichteinsatzteils und ein unkontrolliertes Loslösen der Bruchstücke des Sichteinsatzteils zu verhindern.

### Darstellung der Erfindung

Der Erfindung liegt das technische Problem zugrunde, ein Sichteinsatzteil für Airbagabdeckungen zu schaffen, das ein geringeres Verletzungsrisiko für die Insassen von Kraftfahrzeugen nach einem Auslösen des Airbags darstellt. Außerdem besteht ein der Erfindung zugrunde liegendes technisches Problem darin, ein Herstellungsverfahren für ein solches, das Verletzungsrisiko reduzierendes Sichteinsatzteil bereitzustellen.

Diese Probleme werden durch ein Sichteinsatzteil mit den Merkmalen des Anspruchs 1 bzw. durch ein Herstellungsverfahren nach dem Anspruch 9 wie auch durch eine Airbagabdeckung nach dem Anspruch 16 gelöst.

Der Erfindung liegt der Gedanke zugrunde, ein unkontrolliertes Loslösen des Sichteinsatzteils oder einzelner Bruchstücke des Sichteinsatzteils zu unterbinden. Erstmals ist nun vorgesehen, ein Fangelement in das Sichteinsatzteil zu integrieren, das auch bei einem Ablösen des Sichteinsatzteils von seinem Trägerteil durch Auslösen des Airbags sowohl fest mit dem Trägerteil als auch fest mit dem Sichteinsatzteil verbunden bleibt und damit den eventuell nicht zu verhindernden Ablösevorgang des Sichteinsatzteils vom Trägerteil kontrollierbar macht. Ein solches reißfestes Fangelement kann vorteilhafterweise auch so in das gesamte Sichteinsatzteil integriert werden, daß bei einem Zerbrechen des Sichteinsatzteils in mehrere Bruchstücke, diese Bruchstücke durch das reißfeste Fangelement zusammengehalten werden. Damit ist erstmals auch bei einem Sichteinsatzteil aus zerbrechlichem Material wie Kunststoff die durch die scharfkantigen und teilweise mit hohen Geschwindigkeiten in den Fahrgastraum geschleuderten Bruchstücke hervorgerufene Verletzungsgefahr beträchtlich reduziert. Es kann also auf diese Weise wirkungsvoll vermieden werden, daß Fahrzeuginsassen durch von dem Sichteinsatzteil losgelöste Bruchstücke nach einer Airbagauslösung gefährdet bzw. verletzt werden.

Das Einbringen eines solchen reißfesten Fangelements in ein Sichteinsatzteil für Airbagabdeckungen bietet den Vorteil, daß dieses reißfeste Fangelement ohne großen Mehraufwand in das Sichteinsatzteil integriert werden kann, jedoch gleichzeitig einen wirkungsvollen Schutz vor Separation einzelner Bruchstücke des Sichteinsatzteils bietet.

Das erfindungsgemäße reißfeste Fangelement ist fest mit dem Sichteinsatzteil verbunden, beispielsweise indem es in das Sichteinsatzteil integriert ist. Dabei ragt es so weit aus dem Sichteinsatzteil für Airbagabdeckungen heraus, daß es fest mit dem Trägerteil verbindbar ist. Eine solche Verbindung zwischen dem Fangelement und dem Trägerteil kann beispielsweise eine Verschraubung oder eine Ultraschallverschweißung sein, so daß das Fangelement mit dem Sichteinsatzteil sehr einfach während der Herstellung einer Airbagabdeckung nachträglich an dem Trägerteil befestigt werden kann. Auf diese Weise kann erreicht werden, daß nicht nur ein Separieren einzelner Bruchstücke des Sichteinsatzteils von dem Trägerteil vermieden wird sondern auch, daß ein Loslösen des gesamten Sichteinsatzteils für Airbagabdeckungen von dem Trägerteil vermieden wird. Dies ist besonders erwünscht, da die Befestigungen der Sichteinsatzteile für Airbagabdeckungen nach dem derzeitigen Stand der Technik keinen ausreichenden Schutz vor unerwünschtem Loslösen des Sichteinsatzteils durch eine Airbagauslösung bieten können.

Weitere bevorzugte Ausführungsformen sind durch die Unteranspruche gekennzeichnet.

Nach einer bevorzugten Ausführungsform ist das reißfeste Fangelement dabei in seiner Länge so bemessen, daß sich einzelne Bruchstücke oder das gesamte Sichteinsatzteil von dem Trägerteil loslösen können und eine Relativbewegung zwischen den Bruchstücken bzw. zum Trägerteil möglich ist, daß jedoch ein vollständiges Separieren dieser Bruchstücke voneinander wirkungsvoll vermieden wird. Das Zulassen dieser eingeschränkten Relativbewegung verhindert, daß das Sichteinsatzteil für Airbagabdeckungen eventuell in weitere kleine Bruchstücke aufbricht oder zersplittert, falls es unnötigerweise starr mit dem Trägerteil verbunden bliebe und so hohen dynamischen Belastungen ausgesetzt wäre.

Vorteilhafterweise wird als Fangelement ein reißfester Faden eingesetzt. Anstelle eines reißfesten Fadens oder auch zusätzlich hierzu ist ebenfalls der Einsatz von einem Draht möglich; der so verhindert, daß sich einzelne Segmente des Sichteinsatzteils oder das Sichteinsatzteil selbst unkontrolliert vom Trägerteil ablösen, indem der reißfeste Faden oder Draht fest mit dem Sichteinsatzteil verbunden ist und an dem Trägerteil befestigbar ist. Zur wirkungsvollen Verminderung des Verletzungsrisikos für Kraftfahrzeuginsassen durch Bruchstücke des Sichteinsatzteils für Airbagabdeckungen ist es vorteilhafterweise auch möglich, mehrere reißfeste Fäden'oder Drähte in das Sichteinsatzteil zu integrieren.

Nach einer weiteren bevorzugten Ausführungsform können diese reißfesten Fäden oder Drähte dabei auch ein Geflecht oder eine Matte bilden, um so das Loslösen einzelner Bruchstücke des Sichteinsatzteils zu verhindern. Weiterhin ist es auch möglich, eine Folie oder eine ähnliche reißfeste und elastische Schicht in das Sichteinsatzteil zu integrieren, um so ein unkontrolliertes Loslösen einzelner Bruchstücke des Sichteinsatzteiles zu unterbinden.

Nach einer weiteren bevorzugten Ausführungsform wird ein erfindungsgemäßes Sichteinsatzteil für Airbagabdeckungen aus Kunststoff gefertigt. Ein solches Kunststoffsichteinsatzteil kann ferner mit einer galvanisierten oder lackierten Oberfläche versehen werden, um ein optisch ansprechenderes Erscheinungsbild zu gewährleisten. Die Verwendung von Kunststoff als Basismaterial für ein Sichteinsatzteil bietet den Vorteil, daß der oder die reißfesten Fäden oder Drähte sehr einfach im Herstellungsverfahren des Sichteinsatzteils so in dieses integriert werden können, daß die Verbindung zwischen Faden bzw. Draht und Sichteinsatzteil dauerhaft und haltbar ist.

Als Herstellungsverfahren hat sich vor allem das Spritzgießen als besonders vorteilhaft erwiesen. Im Spritzgußverfahren können beliebige Geometrien schnell und preiswert gefertigt werden. Für die Fertigung von Sichteinsatzteilen für Airbagabdeckungen mit darin integrierten reißfesten Fäden oder Drähten ist es allerdings auch möglich alle anderen fachüblichen Herstellungsverfahren einzusetzen.

Bei der Fertigung von Sichteinsatzteilen für Airbagabdeckungen mit integrierten reißfesten Fangelementen wird grundsätzlich zwischen zwei Herstellungsvarianten unterschieden. Zum einen kann das Fangelement in zufälliger Anordnung in die Spritzgußform eingelegt oder ihr zugeführt werden. Daraufhin wird das Fangelement mit Kunststoff umspritzt, so daß das Sichteinsatzteil für Airbagabdeckungen als Spritzgußstück mit darin integriertem Fangelement entsteht. Diese Vorgehensweise hat den Vorteil, daß das Fangelement ohne großen technischen Aufwand eingelegt oder zugeführt werden kann.

Die zweite Verfahrensvariante beinhaltet, daß das Fangelement durch eine entsprechende Aufnahme in dem Spritzgußwerkzeugpositioniert und gehalten wird. Auch bei diesem Verfahren wird anschließend das Fangelement mit Kunststoff umspritzt.
Diese zweite Variante weist den Vorteil auf, daß die Lage des Fangelementes innerhalb des Sichteinsatzteils bekannt ist bzw. den Erfordernissen entsprechend gewählt werden kann. So ist es beispielsweise bei einem als Schriftzug ausgebildeten Sichteinsatzteil möglich, einen reißfesten Faden oder einen Draht so entlang des Schriftzuges zu führen, daß jeder Buchstabe komplett-von dem Faden oder dem Draht durchzogen ist. Hierdurch kann sichergestellt werden, daß das komplette Sichteinsatzteil für Airbagabdeckungen vor Separation von einzelnen Bruchstücken geschützt ist.

Nach einer weiteren bevorzugten Ausführungsform besteht das Sichteinsatzteil für Airbagabdeckungen aus einem mit einem Trägerteil verbundenen Holzzierteil. Als Grundträgerelement wird dabei häufig ein Leichtmetall, wie beispielsweise Aluminium, verwendet. Bevorzugterweise wird das Holzzierteil auf das Grundträgerelement aufgeklebt, wobei in die Verbindungszone ein Fangelement wie beispielsweise ein reißfester Faden oder ein Draht eingebracht werden kann. Auf diese Weise wird sichergestellt, daß bei einer Airbagauslösung das Sichteinsatzteil weiter mit dem Trägerteil der Airbagabdeckung verbunden bleibt, und ferner eventuell vorhandene Bruchstücke nicht unkontrolliert in den Fahrgastraum geschleudert werden, wo sie die Insassen gefährden bzw. verletzen könnten.

Nach einem weiteren bevorzugten Ausführungsbeispiel ist die Befestigung des Sichteinsatzteiles an dem Trägerteil so ausgebildet, daß eine Sollbruchstelle an der Befestigung vorgesehen ist. So kann erreicht werden, daß sich das Sichteinsatzteil bei einer gewünschten definierten Belastung durch die Airbagauslösung von dem Trägerteil ablöst. Das erfindungsgemäß an dem Sichteinsatzteil reißfest angebrachte Fangelement verhindert so, daß das Sichteinsatzteil unkontrolliert in den Fahrgastraum geschleudert wird und so ein Verletzungsrisiko für die Insassen darstellt. Das Ablösen des Sichteinsatzteils von dem Trägerteil durch eine Sollbruchstelle in der Befestigung hat den Vorteil, daß so ein Zersplittern des Sichteinsatzteils in teilweise scharfkantige Bruchstücke vermieden werden kann, da es nicht weiter mit dem großen dynamischen Belastungen ausgesetzten Trägerteil verbunden bleibt.

Außerdem ist es möglich, daß das Sichteinsatzteil eine Einrichtung zum Anbringen, beispielsweise zum Einhängen eines mit dem Trägerteil unlösbar verbundenen Fangelements aufweist. So kann das Fangelement z.B. bereits bei der Herstellung des Trägerteils der Airbagabdeckung in dieses integriert werden, etwa durch An- oder Umspritzen, und dann mit seinem Fangende reißfest mit dem Sichteinsatzteil verbunden werden.

Das Sichteinsatzteil kann dabei seinerseits mit einem zusätzlichen Teil-Fangelement, z.B. in Form eines Fadens, - Drahtes, Gewebes etc. verstärkt sein, um eventuelle Bruchstücke zusammenzuhalten. Ein Verbindungsende dieses Teil-Fangelements auf seiten des Sichteinsatzteils kann dann reißfest mit dem Verbindungsende des Fangelements auf seiten des Trägerteils verbunden werden. Diese reißfeste Verbindung kann in einer günstigen Lösung durch Verknoten der beiden z.B. faden- oder drahtförmigen Verbindungsenden realisiert werden, ebenso aber auch durch Verschweißen der Verbindungsenden, eine Haken-/ Ösenverbindung oder eine andere geeignete Verbindungstechnik.

In einer zusätzlichen Ausgestaltung der Erfindung ist vorgesehen, das Fangelement neben seiner Rückhaltefunktiongleichzeitig zur Übertragung von elektrischer oder optischer Energie an das Sichteinsatzteil zu verwenden. Auf diese Weise kann das Sichteinsatzteil z.B. aus designoptischen Gründen be- oder hinterleuchtet werden. So kann z.B. eine Leuchtdiode am Sichteinsatzteil angebracht sein, etwa durch Anspritzen, und über das Fangelement mit Strom versorgt werden. Das Fangelement kann hierzu ein Stromkabel, einen Folienleiter oder dergleichen umfassen bzw. selbst derart ausgebildet sein. In einer anderen denkbaren Variante kann das Fangelement einen Lichtwellenleiter (LWL), wie z.B. eine polymer-optische Faser umfassen oder selbst als LWL ausgebildet sein und Licht, das am einen Ende des LWL mittels einer Lampe, Leuchtdiode oder dergleichen eingespeist wird, zum Sichteinsatzteil leiten und dort abstrahlen. Die Lichtabstrahlung im-Bereich des Sichteinsatzteils kann z.B. entlang eines Längenabschnitts des LWL über dessen Oberfläche erfolgen, die dafür aufgerauht oder in vergleichbarer Weise bearbeitet ist. Die Beleuchtung des Sichteinsatzteils kann schaltungstechnisch z.B. an die Instrumentenbeleuchtung gekoppelt sein.

### Kurze Beschreibung der Zeichnungen

Im folgenden sind zur weiteren Erläuterung und zum besseren Verständnis mehrere Ausführungsbeispiele der Erfindung unter Bezugnahme auf die beigefügten Zeichnungen näher beschrieben und erläutert. Es zeigen:
- Fig. 1: einen Schnitt durch ein erfindungsgemäßes Sichteinsatzteil mit Clipbefestigung an einem Trägerteil einer Airbagabdeckung;
- Fig. 2: einen Schnitt durch ein erfindungsgemäßes Sichteinsatzteil, das von dem Trägerteil der Airbagabdeckung getrennt ist;
- Fig. 3: einen Schnitt durch ein erfindungsgemäßes Sichteinsatzteil gemäß Fig. 1 mit Laminataufbau;
- Fig. 4: einen Schnitt durch ein teilweise zerbrochenes Sichteinsatzteil;
- Fig. 5: einen Schnitt durch ein von dem Trägerteil der Airbagabdeckung losgelöstes Sichteinsatzteil;
- Fig. 6: einen Schrif-t-zug mit darin eingelegtem Faden;
- Fig. 7: einen Schnitt durch eine Spritzgußform in Vorderansicht; und
- Fig. 8: einen Schnitt durch eine Spritzgußform in Seitenansicht.

### Beschreibung von Ausführungsbeispielen der Erfindung

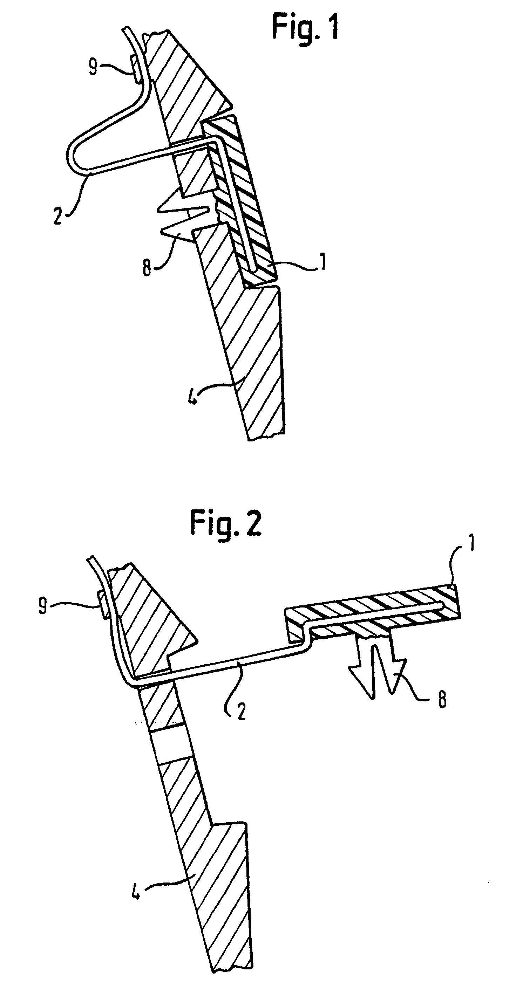

In Fig. 1 ist ein erfindungsgemäßes Sichteinsatzteil 1 für Airbagabdeckungen dargestellt. Das Sichteinsatzteil 1 ist dabei mit einer Clipbefestigung 8 an einem Trägerteil 4 der Airbagabdeckung befestigt. Erfindungsgemäß ist in dem Sichteinsatzteil 1 ein beispielsweise als reißfester Faden oder Draht ausgebildetes Fangelement 2 integriert, wobei sich das Fangelement 2 weitgehend über die gesamte Ausdehnung des Sichteinsatzteils 1 erstreckt. Nach einer bevorzugten Ausführungsform der Erfindung ragt der Faden oder der Draht als Fangelement 2 aus dem Sichteinsatzteil 1 so weit heraus, daß er über eine Befestigungsvorrichtung 9 fest an dem Trägerteil 4 der Airbagabdeckung angebracht werden kann. Das Fangelement 2 befindet sich, wie in Fig. 1 dargestellt, nicht in gespanntem Zustand, wenn das Sichteinsatzteil 1 an dem Trägerteil 4 befestigt ist. Vielmehr ist das Fangelement 2 so angeordnet, daß es so viel Spiel hat, daß das Sichteinsatzteil 1 ausschließlich über die Clipbefestigung 8 mit dem Trägerteil 4 verbunden ist.

Wird nun der Airbag ausgelöst, wodurch die Airbagabdeckung mit Trägerteil 4 und daran angebrachtem Sichteinsatzteil 1 einer großen dynamischen Belastung ausgesetzt wird, kann dies zu einem Versagen der Clipbefestigung 8 führen. Gegebenenfalls ist diese Clipbefestigung 8 auch so ausgestaltet, daß sie eine Sollbruchstelle aufweist, die das Loslösen des Sichteinsatzteils 1 von dem Trägerteil 4 bei einer definierten Belastung garantiert. Das Sichteinsatzteil 1 löst sich dadurch von dem Trägerteil 4 und durch die Relativbewegung zwischen Sichteinsatzteil 1 und Trägerteil 4 wird das als reißfester Faden oder Draht ausgebildete Fangelement 2 gespannt und so das Sichteinsatzteil an seiner unkontrollierten Bewegung gehindert. Das Fangelement 2 hält nun in dem in Fig. 2 dargestellten Zustand das Sichteinsatzteil 1 fest, so daß es weiterhin mit dem Trägerteil 4 der Airbagabdeckung verbunden ist und daher keine Gefahr für die Verletzung von Kraftfahrzeuginsassen bildet.

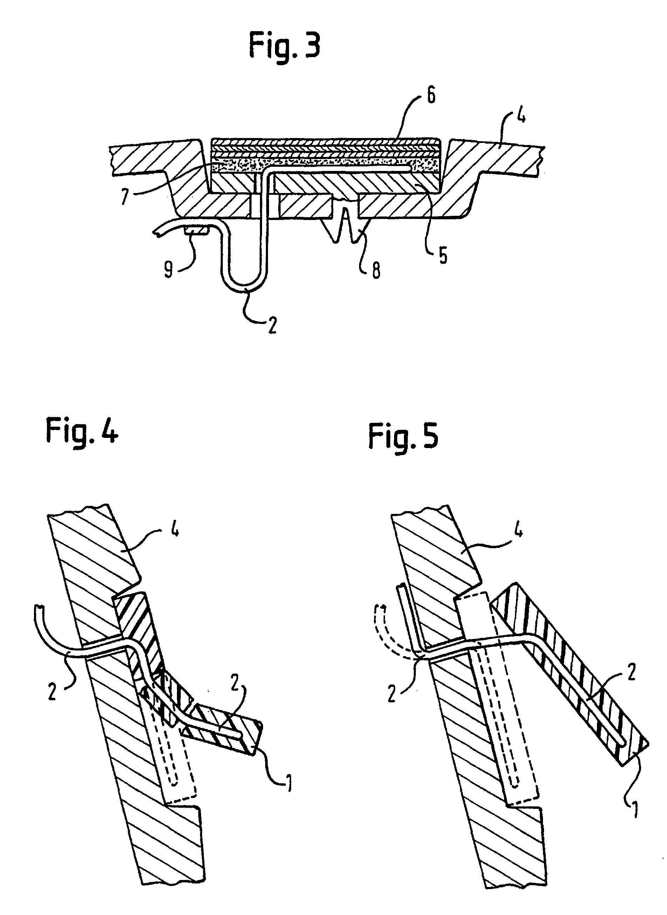

Fig. 3 zeigt ein weiteres erfindungsgemäßes Sichteinsatzteil, welches ebenfalls über eine Clipbefestigung 8 mit einem Trägerteil 4 verbunden ist. Im Unterschied zu dem in Figuren 1 und 2 gezeigten Sichteinsatzteil 1, welches vorzugsweise aus Kunststoff gefertigt ist, ist in Fig. 3 ein Sichteinsatzteil mit Laminataufbau dargestellt. Auf ein Grundträgerelement 5, das vorzugsweise aus einem Leichtmetall, wie etwa Aluminium, besteht, wird über eine Verbindungszone 7 ein beispielsweise mehrschichtiges Holzzierteil 6 angebracht. Um eine sichere Verbindung zwischen dem Sichteinsatzteil und dem Trägerteil 4 der Airbagabdeckung zu gewährleisten, wird zusätzlich zu der Clipverbindung 8 ein Fangelement 2 in die Verbindungszone 7, die vorzugsweise eine Klebschicht ist, eingebracht, so daß das Fangelement 2 so weit aus dem Sichteinsatzteil herausragt, daß es über eine Befestigung 9 mit dem Trägerteil 4 verbunden werden kann. Löst sich nun aufgrund einer Airbagauslösung die Clipbefestigung 8, so daß das Sichteinsatzteil von dem Trägerteil 4 getrennt wird, so verhindert das Fangelement 2, wie in Fig. 2 dargestellt, daß das Sichteinsatzteil sich vollständig von dem Trägerteil 4 der Airbagabdeckung löst und so zu einer Gefahr für die Kraftfahrzeuginsassen wird.

Im Gegensatz zu den Figuren 1 bis 3, die eine Clipbefestigung 8 aufweisen, sind in den Figuren 4 und 5 Sichteinsatzteile 1 dargestellt, die durch Verkleben oder Ultraschallschweißen an dem Trägerteil 4 der Airbagabdeckung angebracht sind. Fig. 4 zeigt dabei die Situation, daß das Sichteinsatzteil 1 durch die Airbagauslösung in einzelne Bruchstücke zerbrochen ist. Erfindungsgemäß werden diese Bruchstücke jedoch durch ein als ein reißfester Faden oder Draht ausgebildetes Fangelement 2 so aneinander und an dem Trägerteil 4 festgehalten, daß sie keine Gefahr für die Insassen des Kraftfahrzeugs darstellen. Das Fangelement 2 ist dabei so in das Sichteinsatzteil 1 integriert, daß ein Ende des Fangelementes 2 aus dem Sichteinsatzteil 1 hervorragt und dieses Ende an dem Trägerteil 4 der Airbagabdeckung befestigt werden kann. Fig. 5 zeigt den Zustand, daß aufgrund einer Airbagauslösung die Verbindung zwischen Sichteinsatzteil 1 und Trägerteil 4 versagt hat, das Sichteinsatzteil 1 jedoch nicht in einzelne Bruchstücke zerbrochen ist. Dadurch löst sich das komplette Sichteinsatzteil 1 von dem Trägerteil 4 ab. Um das Verletzungsrisiko der Fahrzeuginsassen zu verringern, ist in das Sichteinsatzteil 1 erfindungsgemäß ein Fangelement 2 so integriert, daß es im Falle des Versagens der Klebe- oder Schweißverbindung zwischen Sichteinsatzteil 1 und Trägerteil 4 verhindert, daß das Sichteinsatzteil 1 in die Fahrgastzelle geschleudert wird. Dies wird erreicht, indem das Fangelement 2 fest und unlösbar mit dem Sichteinsatzteil verbunden ist und die Möglichkeit besteht, daß das Fangelement 2 an seinem freien Ende an das Trägerteil 4 befestigt wird. Es ist aber auch möglich das Fangelement 2 so zu gestalten, daß es fest und unlösbar an dem Trägerteil 4 angebracht ist und eine lösbare aber reißfeste Verbindung mit dem Sichteinsatzteil 1 hergestellt werden kann.

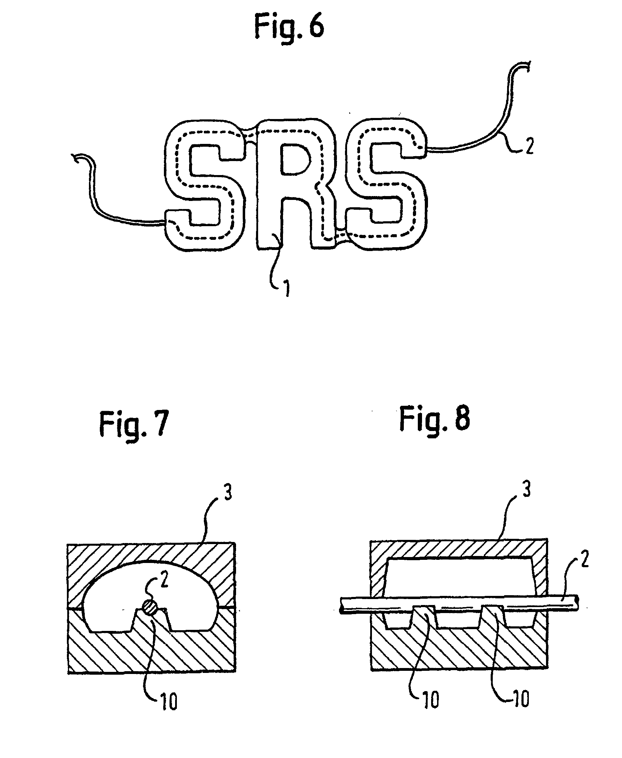

Das Sichteinsatzteil 1 ist häufig als ein Emblem oder Schriftzug ausgebildet, das zum Beispiel entweder einen Hinweis auf das Airbagsystem oder auf die Fahrzeugmarke enthält. Derartige Embleme oder Schriftzüge weisen dabei häufig komplizierte Geometrien auf. Vor allem Schriftzüge können selten daraufhin optimiert werden, daß im Falle der Airbagauslösung der Schriftzug nicht in einzelne Segmente zerbricht. Dadurch ist es hierbei besonders wünschenswert, die einzelnen Buchstaben eines Schriftzugs durch ein Fangelement 2 so miteinander zu verbinden, daß im Falle eines Zerbrechens des Schriftzugs in einzelne Segmente aufgrund einer Airbagauslösung diese Bruchstücke nicht unkontrolliert in den Fahrgastraum eindringen, sondern zur Verringerung des Verletzungsrisikos der Fahrzeuginsassen durch das Fangelement 2 an dem Trägerteil 4 zurückgehalten werden. In Fig. 6 ist beispielhaft die Anordnung eines reißfesten Fadens oder Drahts 2 in einem als Schriftzug ausgebildeten Sichteinsatzteil 1 dargestellt. Der reißfeste Faden oder Draht 2 ragt dabei so weit über die Enden des Sichteinsatzteils 1 heraus, daß er an dem Trägerteil 4 der Airbagabdeckung befestigt werden kann.

Gerade bei komplizierten Geometrien eines Sichteinsatzteils 1, wie beispielsweise bei einem Schriftzug, ist eine sehr exakte Führung des Fangelementes 2 im Herstellungsprozeß notwendig. Üblicherweise werden derartige Sichteinsatzteile 1 im Spritzgußverfahren aus Kunststoff gefertigt. Für eine genaue Positionierung des Fangelementes 2 in dem Sichteinsatzteil 1, wird das Fangelement 2 in der Spritzgußform 3 über eine Halterung 10 in der gewünschten Weise geführt. Anschließend wird das Fangelement 2 mit Kunststoff umspritzt. Auf diese Weise ist sichergestellt, daß das Fangelement 2 exakt an der gewünschten Position im Sichteinsatzteil 1 angeordnet ist. In den Figuren 7 und 8 sind Querschnittsansichten von einer Spritzgußform 3 dargestellt, die derartige Halterungen 10 zum Führen eines als Faden oder Draht ausgebildeten Fangelements 2 in der Spritzgußform 3 auf weist, so daß das Fangelement 2 exakt an einer vorbestimmten Position des Sichteinsatzteils 2 angeordnet ist.

## Patentansprüche

1. Sichteinsatzteil für eine Airbagabdeckung, das an oder in einem Trägerteil (4) anbringbar ist, an dem zumindest ein Fangelement (2) reißfest befestigt und das mit dem Trägerteil (4) verbindbar ist, um bei einer Auslösung des Airbags ein unkontrolliertes Loslösen des Sichteinsatzteils (1) zu verhindern, **dadurch gekennzeichnet, dass** das zumindest eine Fangelement (2) so in dem Sichteinsatzteil (1) integriert ist, dass beim Zerbrechen des Sichteinsatzteils (1) in mehrere Bruchstücke diese Bruchstücke fest über das Fangelement (2) mit dem Trägerteil (4) der Airbagdeckung verbunden sind, um bei einer Auslösung des Airbags das unkontrollierte Loslösen des Sichteinsatzteils (1) oder seiner Bruchstücke von dem Trägerteil (4) zu verhindern.

2. Sichteinsatzteil nach Anspruch 1, **dadurch gekennzeichnet, dass** das Fangelement (2) in seiner Länge so bemessen ist, dass beim Zerbrechen des Sichteinsatzteiles (1) bzw. bei einem Loslösen des Sichteinsatzteiles (1) von dem Trägerteil (4) die Bruchstücke zusammengehalten werden und eine Relativbewegung zueinander ausführen können bzw. eine Relativbewegung des Sichteinsatzteiles (1) zum Trägerteil (4) möglich ist.

3. Sichteinsatzteil nach einem der Ansprüche 1 bis 2, **dadurch gekennzeichnet, dass** an dem Sichteinsatzteil (1) ein reißfester Faden oder ein Draht als Fangelement (2) unlösbar angebracht ist.

4. Sichteinsatzteil nach Anspruch 1, **dadurch gekennzeichnet, dass** das Sichteinsatzteil (1) aus Kunststoff besteht.

5. Sichteinsatzteil nach einem der Ansprüche 1 bis 4, **dadurch gekennzeichnet, dass** an dem Sichteinsatzteil (1) ein Befestigungselement (8) vorhanden ist, das zur Anbringung an dem Trägerteil (4) dient.

6. Sichteinsatzteil nach einem der Ansprüche 1 bis 5, **dadurch gekennzeichnet, dass** das Befestigungselement (8) oder das Trägerteil (4) eine Sollbruchstelle aufweist, so *dass* sich das Sichteinsatzteil (1) bei einer definierten Belastung von dem Trägerteil (4) ablöst.

7. Sichteinsatzteil nach einem der Ansprüche 1 bis 3, **dadurch gekennzeichnet, dass** das Sichteinsatzteil (1) aus einem mit einem Grundträgerelement (5) verbundenen Holzzierteil (6) besteht und in der Verbindungszone (7) zwischen Holzzierteil (6) und Grundträgerelement (5) zumindest das eine Fangelement (2) reißfest integriert ist.

8. Sichteinsatzteil nach einem der vorigen Ansprüche, **dadurch gekennzeichnet, dass** das Sichteinsatzteil (1) eine Einrichtung zum Anbringen des einen mit dem Trägerteil (4) unlösbar verbundenen Fangelementes (2) aufweist.

9. Verfahren zur Herstellung von Kunststoff-Sichteinsatzteilen für Airbagabdeckungen gemäß einem oder mehreren der vorgegangenen Ansprüche, **dadurch gekennzeichnet, dass** ein vor dem Einspritzen des Kunststoffes in eine Spritzgußform (3) der Kontur des Sichteinsatzteils (1) entsprechend eingelegtes Fangelement (2) so durch Kunststoff umspritzt wird, dass das Fangelement (2) zumindest auf der der Airbagabdeckung abgewandten Seite vollständig mit Kunststoff überzogen ist.

10. Verfahren nach Anspruch 9, **dadurch gekennzeichnet, dass** das zumindest eine Fangelement (2) in zufälliger Anordnung in die Form (3) eingelegt oder ihr zugeführt wird.

11. Verfahren nach Anspruch 9, **dadurch gekennzeichnet, dass** das zumindest eine Fangelement (2) durch eine entsprechende Aufnahme (10) im Spritzgußwerkzeug (3) gehalten wird, so dass das Fangelement (2) exakt im Spritzgußwerkzeug (3) positioniert werden kann.

12. Verfahren nach einem der Ansprüche 10 oder 11, **dadurch gekennzeichnet, dass** das zumindest eine Fangelement (2) so umspritzt wird, dass es an einer vorbestimmten Stelle aus dem Sichteinsatzteil (1) hervorsteht, um an einem Trägerteil (4) anbringbar zu sein.

13. Verfahren nach einem der Ansprüche 9 bis 12, **dadurch gekennzeichnet, dass** als Fangelement (2) zumindest ein reißfester Faden oder Draht umspritzt wird.

14. Verfahren nach einem der Ansprüche 9 bis 13, **dadurch gekennzeichnet, dass** ein Gewebe aus mehreren Fäden oder Drähten umspritzt wird, wobei das Gewebe im wesentlichen die Abmessungen des Sichteinsatzteiles (1) aufweist.

15. Verfahren nach einem der Ansprüche 9 bis 13, **dadurch gekennzeichnet, dass** eine reißfeste elastische Folie umspritzt wird, wobei die Folie im wesentlichen die Abmessungen des Sichteinsatzteiles (1) aufweist.

16. Airbagabdeckung, unter der sich ein Airbag befindet, mit einem Trägerteil, an oder in dem ein Sichteinsatzteil (1) angebracht ist, welches über zumindest ein Fangelement (2) reißfest mit dem Trägerteil der Airbagabdeckung (4) verbunden ist, bei dem bei einer Auslösung des Airbags ein unkontrolliertes Loslösen des Sichteinsatzteils (1) zu verhindert wird **dadurch gekennzeichnet, dass** das zumindest eine Fangelement (2) so in dem Sichteinsatzteil (1) integriert ist, dass beim Zerbrechen des Sichteinsatzteils (1) in mehrere Bruchstücke diese Bruchstücke fest über das Fangelement (2) mit dem Trägerteil (4) verbunden sind, um bei der Auslösung des Airbags das unkontrollierte Loslösen des Sichteinsatzteils (1) oder seiner Bruchstücke von dem Trägerteil (4) der Airbagabdeckung zu verhindern.

17. Airbagabdeckung nach Anspruch 16, **dadurch gekennzeichnet, dass** die Airbagabdeckung auf dem Pralltopf eines Lenkrades angebracht ist.

## Claims

1. Exposed insert part for an air-bag cover which is attachable to or in a support part (4), to which at least one catch member (2) is fastened in rupture-resistant manner and which is connectable to the support part (4) in order on deployment of the air-bag to prevent uncontrolled detachment of the exposed insert part (1), **characterized in that** the at least single catch member (2) is integrated in the exposed insert part (1) in such a way that on breakage of the exposed insert part (1) into several fragments these fragments are firmly connected via the catch member (2) to the support part (4) of the air-bag cover in order on deployment of the air-bag to prevent the uncontrolled detachment of the exposed insert part (1) or its fragments from the support part (4).

2. Exposed insert part according to Claim 1, **characterized in that** the catch member (2) is dimensioned in length in such a way that on breakage of the exposed insert part (1) or on detachment of the exposed insert part (1) from the support part (4) the fragments are held together and can execute a relative movement relative to one another or a relative movement of the exposed insert part (1) relative to the support part (4) is possible.

3. Exposed insert part according to one of Claims 1 to 2, **characterized in that** a tear-resistant thread or a wire is attached undetachably as catch member (2) to the exposed insert part (1).

4. Exposed insert part according to Claim 1, **characterized in that** the exposed insert part (1) is composed of plastic.

5. Exposed insert part according to one of Claims 1 to 4, **characterized in that** on the exposed insert part (1) there is a fastening member (8) which serves for attachment to the support part (4).

6. Exposed insert part according to one of Claims 1 to 5, **characterized in that** the fastening member (8) or the support part (4) possesses a predetermined breaking point so that under a defined load the exposed insert part (1) detaches itself from the support part (4).

7. Exposed insert part according to one of Claims 1 to 3, **characterized in that** the exposed insert part (1) is composed of a wooden decorative part (6) connected to a base support member (5) and in the connection zone (7) between the wooden decorative part (6) and the base support member (5) at least one catch member (2) is integrated in rupture-resistant manner.

8. Exposed insert part according to one of the preceding claims, **characterized in that** the exposed insert part (1) possesses a device for the attachment of one catch member (2) connected undetachably to the support part (4).

9. Method for the production of plastic exposed insert parts for air-bag covers according to one or more of the preceding claims, **characterized in that** a catch member (2) inserted prior to injection of the plastic into an injection mould (3) corresponding to the contour of the exposed insert part (1) is overmoulded by plastic in such a way that the catch member (2) is completely overlaid with plastic at least on the side facing away from the air-bag cover.

10. Method according to Claim 9, **characterized in that** the at least single catch member (2) is inserted into the mould (3) or added thereto in random arrangement.

11. Method according to Claim 9, **characterized in that** the at least single catch member (2)is held by a corresponding receptacle (10) in the injection mould (3) so that the catch member (2) can be positioned exactly in the injection mould.

12. Method according to one of Claims 10 or 11, **characterized in that** the at least single catch member (2) is overmoulded in such a way that it protrudes out of the exposed insert part (1) at a predetermined point in order to be attachable to a support part (4).

13. Method according to one of Claims 9 to 12, **characterized in that** for the catch member (2) at least one tear-resistant thread or wire is overmoulded.

14. Method according to one of Claims 9 to 13, **characterized in that** a woven mesh of a plurality of threads or wires is overmoulded, wherein the woven mesh has substantially the dimensions of the exposed insert part (1).

15. Method according to one of Claims 9 to 13, **characterized in that** a tear-resistant elastic film is overmoulded, wherein the film has substantially the dimensions of the exposed insert part (1).

16. Air-bag cover under which an air-bag is located having a support part to or in which an exposed insert part (1) is attached which is connected via at least one catch member (2) in rupture-resistant manner to the support part of the air-bag cover (4) in which on deployment of the air-bag uncontrolled detachment of the exposed insert part (1) is prevented, **characterized in that** the at least single catch member (2) is integrated in the exposed insert part (1) in such a way that on breakage of the exposed insert part (1) into several fragments these fragments are firmly connected via the catch member (2) to the support part (4) in order on deployment of the air-bag to prevent the uncontrolled detachment of the exposed insert part (1) or its fragments from the support part (4) of the air-bag cover.

17. Air-bag cover according to Claim 16, **characterized in that** the air-bag cover is attached on the impact casing of a steering wheel.

## Revendications

1. Pièce d'habillage visible pour un revêtement de coussin gonflable (airbag) qu'on peut installer sur ou dans un élément porteur (4) à laquelle est fixé au moins un élément d'arrêt (2) de façon à résister à l'arrachement et laquelle peut être reliée à l'élément porteur (4) afin d'éviter un détachement incontrôlé de la pièce d'habillage visible (1) lors de la libération du coussin gonflable, **caractérisée en ce que** l'élément d'arrêt (2) au moins au nombre d'un est intégré dans la pièce d'habillage visible (1) de telle façon que lorsque la pièce d'habillage visible (1) se brise en plusieurs fragments ces fragments sont fermement liés à l'élément porteur (4) du revêtement de coussin gonflable au moyen de l'élément d'arrêt (2) afin d'éviter que la pièce d'habillage visible (1) ou ses fragments ne se détachent de façon incontrôlée de l'élément porteur (4) lors de la libération du coussin gonflable.

2. Pièce d'habillage visible selon la revendication 1 **caractérisée en ce que** l'élément d'arrêt (2) a une longueur telle que lorsque la pièce d'habillage visible (1) se brise ou lorsque la pièce d'habillage visible (1) se détache de l'élément porteur (4), les fragments sont maintenus ensemble et qu'ils peuvent exécuter les uns par rapport aux autres un mouvement relatif ou qu'un mouvement relatif de la pièce d'habillage visible (1) est possible par rapport à l'élément porteur (4).

3. Pièce d'habillage visible selon l'une des revendications 1 à 2 **caractérisée en ce que** sur la pièce d'habillage visible (1) on a appliqué un fil textile ou un fil métallique résistant à l'arrachement pour servir d'élément d'arrêt (2) indétachable.

4. Pièce d'habillage visible selon la revendication 1 **caractérisée en ce que** la pièce d'habillage visible (1) est en matière synthétique.

5. Pièce d'habillage visible selon l'une des revendications 1 à 4 **caractérisée en ce que** sur la pièce d'habillage visible (1) il y a un élément de fixation (8) qui sert à l'application sur l'élément porteur (4).

6. Pièce d'habillage visible selon l'une des revendications 1 à 5 **caractérisée en ce que** l'élément de fixation (8) ou l'élément porteur (4) présente un point de rupture théorique de sorte que la pièce d'habillage visible (1) se détache de l'élément porteur (4) sous l'effet d'une charge définie.

7. Pièce d'habillage visible selon l'une des revendications 1 à 3 **caractérisée en ce que** la pièce d'habillage visible (1) consiste en une pièce de bois décoratif (6) liée à un élément porteur de base (5) et que dans la zone de liaison (7) entre la pièce de bois décoratif (6) et l'élément porteur de base (5) est intégré au moins l'élément d'arrêt (2) en question de façon à résister à l'arrachement.

8. Pièce d'habillage visible selon l'une des revendications précédentes **caractérisée en ce que** la pièce d'habillage visible (1) présente un dispositif destiné à appliquer celui de l'élément d'arrêt (2) qui est indétachablement lié à l'élément porteur (4).

9. Procédé pour la fabrication de pièces de revêtement intérieur visible (1) en matière synthétique pour des revêtements de coussin gonflable selon l'une ou plusieurs des revendications précédentes **caractérisé en ce qu'**un élément d'arrêt (2), inséré avant l'injection de la matière synthétique dans un moule de moulage par injection (3) de façon qui corresponde au contour de la pièce d'habillage visible (1), soit gainé par la matière synthétique de telle manière que l'élément d'arrêt (2) soit entièrement recouvert de matière synthétique au moins du côté détourné du revêtement de coussin gonflable.

10. Procédé selon la revendication 9 **caractérisé en ce que** l'élément d'arrêt (2) au moins au nombre d'un est introduit dans le moule (3) selon un assemblage fortuit ou qu'il y est amené.

11. Procédé selon la revendication 9 **caractérisé en ce que** l'élément d'arrêt (2) au moins au nombre d'un est maintenu dans l'outil de moulage par injection (3) par un évidement correspondant, de sorte qu'il est possible de positionner exactement l'élément d'arrêt (2) dans l'outil de moulage par injection (3).

12. Procédé selon l'une des revendications 10 ou 11 **caractérisé en ce que** l'élément d'arrêt (2) au moins au nombre d'un est gainé de telle façon qu'il dépasse de la pièce d'habillage visible (1) à un endroit prédéfini, afin qu'on puisse l'appliquer sur un élément porteur (4).

13. Procédé selon l'une des revendications 9 à 12 **caractérisé en ce que** pour servir d'élément d'arrêt (2) on gaine au moins un fil textile ou un fil métallique résistant à l'arrachement.

14. Procédé selon l'une des revendications 9 à 13 **caractérisé en ce qu'**on gaine un tissu composé de plusieurs fils textiles ou métalliques, le tissu présentant pour l'essentiel les dimensions de la pièce d'habillage visible (1).

15. Procédé selon l'une des revendications 9 à 13 **caractérisé en ce qu'**on gaine une feuille élastique résistante à l'arrachement, la feuille présentant pour l'essentiel les dimensions de la pièce d'habillage visible (1).

16. Revêtement de coussin gonflable, sous lequel se trouve un coussin gonflable, avec un élément porteur, sur ou dans lequel est appliqué une pièce d'habillage visible (1) laquelle est liée à l'élément porteur du revêtement de coussin gonflable (4) de façon à résister à l'arrachement au moyen d'un élément d'arrêt (2) au moins au nombre d'un, pour lequel on évite un détachement incontrôlé de la pièce d'habillage visible (1) lors de la libération du coussin gonflable, **caractérisé en ce que** l'élément d'arrêt (2) au moins au nombre d'un est intégré dans la pièce d'habillage visible (1) de telle façon que lorsque la pièce d'habillage visible (1) se brise en plusieurs fragments ces fragments sont fermement liés à l'élément porteur (4) au moyen de l'élément d'arrêt (2) afin d'éviter que la pièce d'habillage visible (1) ou ses fragments ne se détachent de façon incontrôlée de l'élément porteur (4) lors de la libération du coussin gonflable.

17. Revêtement de coussin gonflable selon la revendication 16 **caractérisé en ce que** le revêtement de coussin gonflable est disposé sur la cavité centrale d'un volant.
